(19) Europäisches Patentamt

European Patent Office

Office européen des brevets

(11) Veröffentlichungsnummer: **0 249 800 B1**

(12) **EUROPÄISCHE PATENTSCHRIFT**

(45) Veröffentlichungstag der Patentschrift: **20.05.92**

(21) Anmeldenummer: **87107993.5**

(22) Anmeldetag: **03.06.87**

(51) Int. Cl.⁵: **G01N 21/88**, G02B 26/10, G01M 11/02

(54) **Vorrichtung zum Beleuchten von Bauteilen aus transparentem Material bei der Fehlerprüfung.**

(30) Priorität: **14.06.86 DE 3620108**

(43) Veröffentlichungstag der Anmeldung:
**23.12.87 Patentblatt 87/52**

(45) Bekanntmachung des Hinweises auf die
Patenterteilung:
**20.05.92 Patentblatt 92/21**

(84) Benannte Vertragsstaaten:
**AT BE CH DE ES FR GB GR IT LI LU NL SE**

(56) Entgegenhaltungen:
**EP-A- 0 146 005**
**EP-A- 0 168 643**
**DE-A- 2 337 597**
**GB-A- 2 085 579**

**PATENT ABSTRACTS OF JAPAN, Band 7, Nr. 42 (P-177)[1187], 19. Februar 1983 & JP-A-57 193 876**

(73) Patentinhaber: **Battelle-Institut e.V.**
**Am Römerhof 35 Postfach 900 160**
**W-6000 Frankfurt/Main 90(DE)**

(72) Erfinder: **Schmalfuss, Harald, Dr.**
**Rosenring 11a**
**W-6054 Rodgau 3(DE)**
Erfinder: **Sinsel, Friedel**
**Severusstrasse 49**
**W-6000 Frankfurt/Main(DE)**
Erfinder: **Bolz, Reinhold**
**Weingartenstrasse 6**
**W-6093 Flörsheim(DE)**

EP 0 249 800 B1

**Beschreibung**

Die Erfindung betrifft eine Vorrichtung zum Prüfen eines durchsichtigen Prüflings auf Oberflächenfehler und Einschlüsse mit einer Lichtquelle, die ein Lichtbündel auf einen Abtaster lenkt, der das Lichtbündel zu einer Sammellinse lenkt, von wo es den Prüfling durchleuchtet, hinter dem es in einer Prüfeinrichtung analysiert wird.

Eine Vorrichtung mit diesen Merkmalen beschreibt die GB 20 85 579 A. Das Lichtbündel durchstrahlt den Prüfling dort senkrecht zur Fläche des Lichtbündels.

Die Druckschrift Patent Abstract of Japan, Band 7, S. 177 (1187) beschreibt eine ähnliche Vorrichtung, bei der hinter der Sammellinse ein Kippspiegel angeordnet ist. Der Kippspiegel dient zum Abtasten der Prüflingsfläche.

Ausgehend von einer Vorrichtung mit den Merkmalen des Oberbegriffs von Patentanspruch 1 liegt der Erfindung daher die Aufgabe zugrunde, diese so auszugestalten, daß auch kompliziert geformte Prüflinge in den Randbereichen untersucht werden können.

Zur Lösung dieser Aufgabe ist die Erfindung dadurch gekennzeichnet, daß im Strahlenbündel zwischen der Sammellinse und dem Prüfling ein Umlenkspiegel angeordnet ist, der in Richtung der optischen Achse der Sammellinse verschiebbar ist und der um eine dazu senkrechte Achse kippbar ist.

Je nach Stellung des Umlenkspiegels kann man somit die jeweils gewünschten Bereiche des Prüflings durchleuchten und analysieren, so daß auch ein schräger Lichteinfall möglich ist, wobei die Lichtstrahlen auch den Randbereich durchleuchten.

Im allgemeinen ist der Lichtstrahl als Band ausgebildet. Um den gesamten Körper des Prüflings zu durchleuchten, wird es daher bevorzugt, wenn der Prüfling drehbar ist.

Falls vor dem Prüfling eine verstellbare Spaltblende angeordnet ist, kann die Länge des Lichtbandes eingestellt werden.

Weiterhin wird es bevorzugt, wenn zur Drehung des Prüflings ein mit dem Abtaster synchronisierter Schrittmotor vorgesehen ist. Dadurch kann die Drehung des Abtasters mit derjenigen des Prüflings synchronisiert werden. In diesem Zusammenhang sei erwähnt, daß der Abtaster vorzugsweise als rotierender Polygonspiegel ausgebildet ist.

Die Erfindung wird im folgenden anhand von Ausführungsbeispielen näher erläutert. Es zeigt:

Fig. 1 - den grundsätzlichen Aufbau einer erfindungsgemäßen Vorrichtung;

Fig. 2 - eine Draufsicht auf den in der Vorrichtung nach Fig. 1 eingesetzten Prüfling;

Fig. 3- die Verhältnisse beim Beleuchten einer bikonvexen Linse mit stark gekrümmten Oberflächen;

Fig. 4 die Verhältnisse beim Beleuchten einer plankonkaven Linse mit stark gekrümmter konkaver Oberfläche.

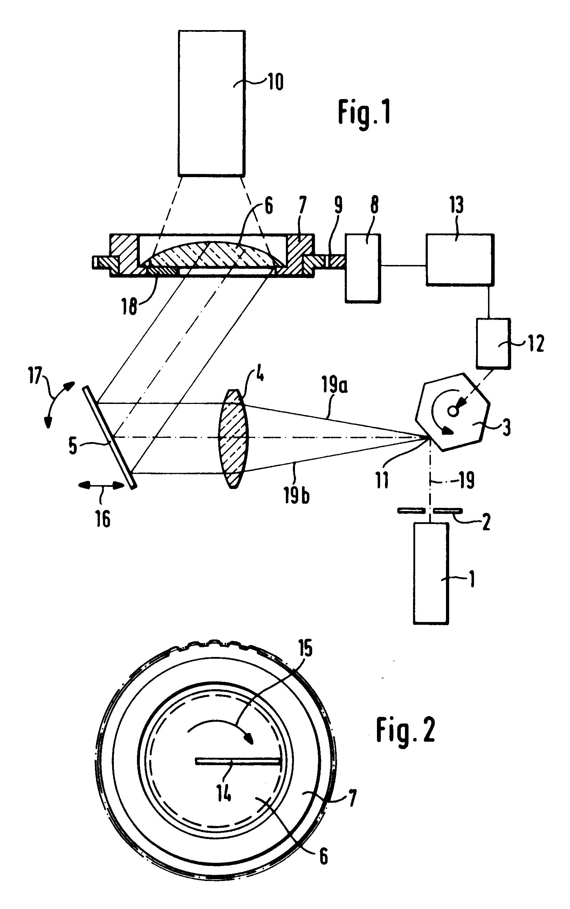

In Fig. 1 ist mit (1) ein Laser bezeichnet, der vorzugsweise als He-Ne-Laser ausgebildet ist und bei einer Betriebswellenlänge von 628 nm arbeitet. Vor diesem Laser ist ein Modenfilter (2) angeordnet. Das durch dieses Filter tretende parallele Lichtbündel (19) trifft im Punkt (11) auf einen Polygonspiegel (3) auf, welcher mittels eines Motors (12) in Pfeilrichtung gedreht wird. Dadurch wird das Lichtbündel (19) zwischen den mit (19a) und (19b) bezeichneten Extremlagen periodisch abgelenkt. Das vom Spiegel (3) reflektierte Lichtbündel (19) tritt durch eine Sammellinse (4), welche vorteilhaft als f-Theta-Linse ausgebildet ist. Der Brennpunkt dieser Linse fällt mit dem Drehpunkt (11) des umlenkenden Polygonspiegels zusammen. Hinter der Linse (4) verlaufen die abgelenkten Lichtbündel (19a) und (19b) parallel zueinander. Sie werden durch einen Umlenkspiegel (5) auf die zu prüfende Linse (6) abgelenkt. Der Umlenkspiegel (5) ist motorisch in Richtung des Pfeiles (16) verschiebbar und in Richtung des Pfeiles (17) drehbar.

Die zu prüfende Linse (6) ist auf einem Drehteller (7) angeordnet, welcher über ein Zahnrad (9) von einem Schrittmotor (8) gedreht wird. Der Schrittmotor (8) und der Motor (12) zur Drehung des Polygonspiegels (3) sind über eine elektronische Anordnung (13) synchronisiert.

Durch das dargestellte Beleuchtungssystem wird, wie Fig. 2 zeigt die Linse (6) in Form eines schmalen Lichtbandes (14) beleuchtet, das vom Lichtbündel (19) zwischen seinen Extremlagen (19a) und (19b) durchfahren wird. Zugleich wird die Linse (6) mittels des Schrittmotors (8) in Richtung des Pfeiles (15) gedreht, so daß nach einer vollen Umdrehung der Linse (6) das speichenförmige Lichtband (14) vollständig durch die Linse gewandert ist, d.h. während eines vollen Umlaufes um 360° werden sämtliche Volumenelemente der Linse (6) beleuchtet. Die Beleuchtung erfolgt mittels des ausgelenkten Lichtbündels (19), das an beiden Oberflächen der Linse (6) in etwa denselben Fokussierungszustand hat.

In Lichtrichtung gesehen hinter der zu prüfenden Linse (6) ist eine schematisch dargestellte Prüfeinrichtung (10) angeordnet, welche das durch die Linse (6) tretende Licht aufnimmt und welche aus einer irregulären Beeinflussung des Lichtes, beispielsweise durch eine der Oberflächen der Linse (6), vorhandene Fehler detektiert und lokalisiert.

In Lichtrichtung gesehen vor der Linse (6) ist eine einstellbare Spaltblende (18) angeordnet, welche das speichenförmige Lichtband (14) begrenzt.

Die Ablenkung des Lichtbündels (19) erfolgt so, daß es in der Extremlage (19b) auf die Auflage (7) treffen würde. Zur Vermeidung von störenden Reflexionen dient dann die Spaltblende (18).

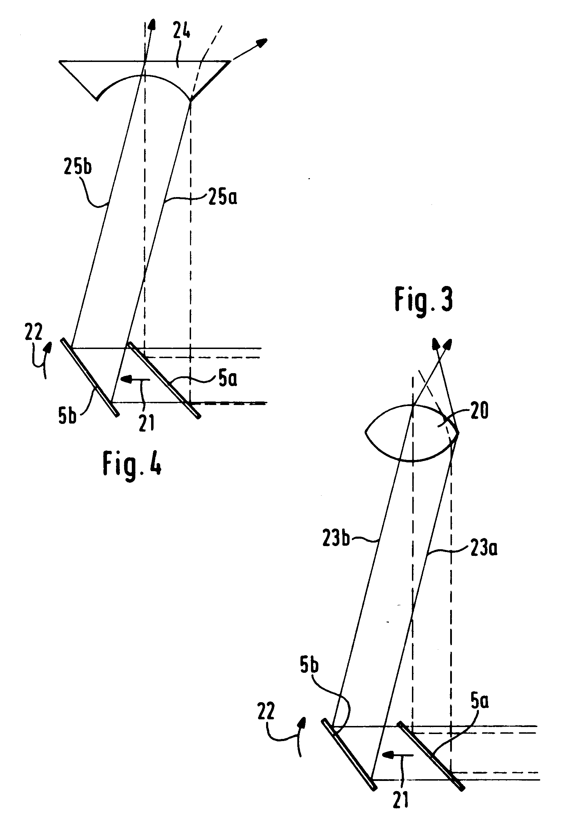

In Fig. 3 ist die prüfende Linse mit (20) bezeichnet. Sie ist hier als eine bikonvexe Sammellinse mit stark gekrümmten Oberflächen ausgebildet. Bedingt durch diese Form der Linsenoberflächen würde bei einer, beispielsweise zur Prüfung der Linse (6) der Fig. 1 dienende Lage (5a) des Reflexionsspiegels (5) Licht nicht das gesamte Volumen der Linse (20) beleuchten. Aus diesem Grunde wird der Reflexionsspiegel (5) in Richtung des Pfeils (21) verschoben und in Richtung des Pfeils (22) gedreht und erreicht die Position (5b). In dieser Position wird das vom Laser (1) erzeugte Lichtbündel (19) zwischen den Extremlagen (23a) und (23b) abgelenkt. Man erkennt, daß dieses Lichtband jetzt beide Oberflächen der Linse (20) gleichmäßig erfaßt.

Ähnliche Verhältnisse ergeben sich bei der Prüfung einer Linse (24) der Fig. 4. Die dort dargestellte plankonkave Linse hat eine stark gekrümmte konkave Oberfläche und in der normalen Position (5a) des Umlenkspiegels (5) würde nicht das gesamte Linsenvolumen beleuchtet. Aus diesem Grunde wird auch hier der Spiegel (5) in Richtung des Pfeiles (21) verschoben und in Richtung des Pfeiles (22) gedreht solange bis er die Position (5b) erreicht. In dieser Position wird das Lichtbündel (19) zwischen den Extremlagen (25a) und (25b) abgelenkt. Man erkennt, daß jetzt das gesamte Volumen der Linse (24) gleichmäßig beleuchtet wird.

**Patentansprüche**

1. Vorrichtung zum Prüfen eines durchsichtigen Prüflings (6) auf Oberflächenfehler und Einschlüsse mit einer Lichtquelle (1), die ein Lichtbündel (19) auf einen Abtaster (3) lenkt, der das Lichtbündel zu einer Sammellinse (4) lenkt, von wo es den Prüfling (6) durchleuchtet, hinter dem es in einer Prüfeinrichtung (10) analysiert wird,
**dadurch gekennzeichnet,**
daß im Strahlenbündel (19) zwischen der Sammellinse (4) und dem Prüfling (6) ein Umlenkspiegel (5) angeordnet ist, der in Richtung der optischen Achse der Sammellinse (4) verschiebbar ist und der um eine dazu senkrechte Achse kippbar ist (Pfeil 17).

2. Vorrichtung nach Anspruch 1,
**dadurch gekennzeichnet,**
daß der Prüfling (6) drehbar ist.

3. Vorrichtung nach Anspruch 1 oder 2,
**dadurch gekennzeichnet,**
daß vor dem Prüfling (6) eine verstellbare Spaltblende (18) angeordnet ist.

4. Vorrichtung nach Anspruch 2 oder 3,
**dadurch gekennzeichnet,**
daß zur Drehung des Prüflings (6) ein mit dem Abtaster (3) synchronisierter Schrittmotor (8) vorgesehen ist.

**Claims**

1. Apparatus for checking a transparent testpiece (6) for surface flaws and inclusions comprising a light source (1) which directs a light beam (19) on to a scanner (3) which directs the light bed to a convergent lens (4) fro which it shines through the testpiece (6), behind which it is analysed in a checking device (10), characterised in that arranged in the beam (19) between the convergent lens (4) and the testpiece (6) is a deflecting mirror (5) which is displaceable in the direction of the optical axis of the convergent lens (4) and which is tiltable about an axis perpendicular thereto (arrow 17).

2. Apparatus according to claim 1 characterised in that the testpiece (6) is rotatable.

3. Apparatus according to claim 1 or claim 2 characterised in that an adjustable aperture stop (18) is arranged in front of the testpiece (6).

4. Apparatus according to claim 2 or claim 3 characterised in that a stepping motor (8) which is synchronised with the scanner (3) is provided for rotation of the testpiece (6).

**Revendications**

1. Dispositif de contrôle d'un échantillon 6 transparent du point de vue de défauts de surface et inclusions à l'aide d'une source de lumière (2), qui dirige un faisceau de lumière (19) sur un analyseur (3), qui envoie le faisceau lumineux sur une lentille convergente (4) d'où il mire la pièce (6), en arrière de laquelle on analyse le faisceau dans un dispositif d'essai (10), caractérisé en ce qu'on place un miroir de renvoi (5) dans le faisceau lumineux (19) entre la lentille convergente (4) et la pièce (6), miroir qu'on peut déplacer le long de l'axe optique de la lentille convergente (4), et qu'on peut faire pivoter autour d'un axe perpendiculaire à l'axe optique (flèche 17).

2.  Dispositif selon la revendication 1, caractérisé en ce que la pièce (6) peut pivoter.

3.  Dispositif selon la revendication 1 ou 2, caractérisé en ce qu'on place un diaphragme à fente réglable (18) en avant de la pièce (6).

4.  Dispositif selon la revendication 2 ou 3, caractérisé en ce qu'on prévoit un moteur pas à pas (8) synchronisé avec l'analyseur (3) pour faire tourner la pièce (6).

Fig.1

Fig. 2

Fig.4

Fig.3